# EUROPÄISCHE PATENTANMELDUNG

(11) **EP 0 622 501 A1**
(43) Veröffentlichungstag der Anmeldung: **02.11.1994**
(21) Anmeldenummer: 94105640.0
(22) Anmeldetag: 13.04.1994
(51) Int. Cl.: E04F 10/10, E06B 9/24, E06B 9/92, F24J 2/04, F24J 2/40

(54) **Vorrichtung zur Verkleidung einer Fassade**

(30) Priorität: 30.04.1993 DE 9306519 U
(71) Anmelder: Woelfert, Dietmar, CH-4425 Titterten (CH)
(72) Erfinder: Woelfert, Dietmar, CH-4425 Titterten (CH)
(74) Vertreter: Stenger, Watzke & Ring Patentanwälte

(57) **Zusammenfassung**

Zur Verbesserung der Verkleidung von Fassaden hinsichtlich der Anwendbarkeit unterschiedlicher Funktionselemente wird eine Vorrichtung zur Verkleidung einer Fassade angegeben, bei welcher ein flächiges Fassadenelement (3), welches an einem Fassadenunterbau (2) angeordnet eine Fassadenaußenseite bildet, mittels Halteelementen (8) am Fassadenunterbau (2) und zu diesem relativbeweglich befestigbar ist und mit wenigstens einem Stellglied (7) relativ zum Fassadenunterbau verstellbar ist.

## Beschreibung

Die Erfindung betrifft eine Vorrichtung zur Verkleidung einer Fassade mit einem flächigen Fassadenelement, welches, an einem Fassadenunterbau angeordnet, eine Fassadenaußenseite bildet.

Derartige Fassadenverkleidungsvorrichtungen werden im modernen Häuserbau, insbesondere Hochhausbau, intensiv eingesetzt. Der Fassadenunterbau besteht in der Regel aus einem Betongebäude, welches Fensteröffnungen und zu verkleidende Unterbauflächen aufweist. Moderne Fassaden werden beispielsweise so aufgebaut, daß die Fensterflächen und die verkleideten Flächen in einer Ebene liegen und eine glatte, wohlgestaltete Außenfassade bilden. Die Fassadenelemente, welche zur Verkleidung am Fassadenunterbau angeordnet werden, sind gestalterisch mit den Fensterflächen zu einer optischen Einheit integrierbar. Besonders im Hochhausbau müssen solche Fassaden neben einem optisch ansprechenden Erscheinungsbild weitestgehend automatisch zu reinigen und insgesamt wetterunanfällig sein, beispielsweise frost- und sturmsicher.

Diesen Anforderungen steht jedoch die Verwendung moderner Funktionselemente entgegen, welche ein derartiges Haus überhaupt nutzbar machen oder dessen Nutzung verbessern. Dazu gehören neben Sicht- und/oder Sonnenschutzelementen auch Elemente zur Lichtverwertung, beispielsweise Filterung oder Umlenkung des Lichtes zur Verbesserung der Beleuchtungsausbeute, oder die Energieumwandlung von Sonnenlicht. Beispielsweise werden Sicht- oder Sonnenschutzelemente als separate Module an den Fassaden angeordnet. Es handelt sich im wesentlichen um in Modulkästen aufgerollte Lamellen oder Geweberollos, wobei die Kästen entweder auf der Fassadenoberfläche angeordnet oder in höchst aufwendiger Konstruktionsweise in die Fassade hinein integriert. Beispielsweise zur Reflektion oder Umlenkung des auftreffenden Sonnenlichtes zur Beleuchtungsverbesserung an einer gewünschten Stelle verwendete Lichtauswertungselemente sind, wenn überhaupt, ebenfalls nur als Zusatzmodul auf die Fassade aufbringbar. Module zur Energiegewinnung aus dem Sonnenlicht sind schon aufgrund ihres Eigengewichtes praktisch kaum in Verbindung mit einem modernen Fassadenaufbau zu verwenden, mit einem befriedigenden Wirkungsgrad jedoch allenfalls an direkt nach Süden weisenden Fronten.

Die Anordnung von zusätzlichen Funktionsmodulen verändert das opische Erscheinungsbild der Gesamtfassade, welches in der Regel verunstaltet wird. Darüber hinaus muß der Fassadenunterbau mehrfach durchbrochen werden, wodurch die Fassade ingesamt störanfälliger wird. Weiterhin fördern die aufgesetzten Elemente die Verunreinigung der Fassade, deren automatische Reinigung durch die aufgebrachten Elemente zudem verhindert wird. Schließlich wird die Fassade insgesamt wetteranfälliger, da sie beispielsweise starkem Wind eine undefiniert große Angriffsfläche bietet. Ein weiteres Problem besteht darin, daß eine Vielzahl von Funktionselementen nicht mehr ausreichend an dem Fassadenunterbau gesichert werden können, was hinsichtlich des Einsatzes der möglichen Funktionselemente eine erhebliche Beschränkung bedeutet.

Davon ausgehend liegt der Erfindung die **Aufgabe** zugrunde, eine Vorrichtung zur Verkleidung einer Fassade der gattungsgemäßen Art derart zu verbessern, daß die obengenannten Nachteile beseitigt werden, die Fassade insbesondere für die Anordnung von Funktionselementen variabel wird.

Zur **Lösung** dieser Aufgabe wird die Vorrichtung zur Verkleidung einer Fassade weitergebildet durch die Anordnung von Halteelementen, mit welchen das Fassadenelement am Fassadenunterbau zu diesem relativbeweglich befestigbar ist, und wenigstens einem Stellglied, mit welchem das Fassadenelement in seiner Lage relativ zum Fassadenunterbau verstellbar ist.

Durch die erfindungsgemäße Lehre ist es nunmehr möglich, das Fassadenelement selbst als Funktionselement auszugestalten, da es nunmehr aus der reinen Fassadenverkleidungslage in eine Funktionslage verfahrbar ist. Beispielsweise kann ein oberhalb oder seitlich eines Fensters angeordnetes Fassadenelement derart aus seiner Fassadenverkleidungslage herausbewegt werden, daß es in den Strahlengang des Sonnenlichts zum Fenster gestellt wird und somit als Beschattungselement dient. Auch kann ein Fassadenelement derart eingestellt werden, daß auftreffendes Sonnenlicht in eine Fensteröffnung reflektiert wird und dort zur Beleuchtung beiträgt. Weiterhin kann das Fassadenelement so eingestellt werden, daß das Sonnenlicht in einem zur Ausnutzung jeweils optimalen Winkel auftrifft, wozu das Fassadenelement auch über die Zeit nachgestellt werden kann. Schließlich kann das Fassadenelement durch die erfindungsgemäße Vorrichtung auch so eingestellt werden, daß der Windwiderstand insgesamt verringert wird. Es ist dabei selbstverständlich, daß auch die Dachfassade eines Hauses mit der erfindungsgemäßen Vorrichtung verkleidet werden kann.

In vorteilhafter Weise sind die Halteelemente Drehgelenke. Das zur Verkleidung eingesetzte Fassadenelement kann beispielsweise entlang einer Kante oder im Bereich zweier Ecken mit Drehgelenken am Fassadenunterbau angeordnet werden und ist somit mittels eines Stellgliedes um die sich daraus ergebende Achse aus der durch die Fassadenoberfläche gebildete Ebene herausbeweglich. In vorteilhafter Weise können die Halteelemente als Gleitlager ausgebildet werden, wodurch das Fassadenelement in der Fassadenoberflächenebene verfahrbar wird. Ein besonderer Vorteil ergibt sich durch die Kombination von Drehgelenken und Gleitlagern, wodurch das Fassadenelement in nahezu jede beliebige Position bringbar ist.

Mit Vorteil wird angegeben, daß das Stellglied ein teleskopartiges Ausstellelement ist. Bei Verwendung von Drehgelenken kann das mit der erfindungsgemäßen Vorrichtung angeordnete Fassadenelement durch aus- oder einfahren des teleskopartigen Ausstellelementes aus der durch die Fassadenoberfläche gebildeten Ebene herausbewegt werden. Auch kann das Stellglied ein scherenartiges Anstellelement sein, wodurch eine drehende und eine gleitende Bewegung des Fassadenelementes ermöglicht wird. Auch ist eine Kombination von teleskop- und scherenartigem Stellglied im Rahmen der Erfindung.

Mit Vorteil wird angegeben, daß das Stellglied manuell betätigbar ist. Dies ist insbesondere dann wünschenswert, wenn die Fassadenelemente als Sonnen- oder Sichtschutz in den Bereich vor einem Fenster verfahrbar sein sollen. Die manuelle Betätigung, beispielsweise mittels einer Kurbel, stellt dann eine kostengünstige und störunanfällige Bedienmöglichkeit dar, die eine individuelle Bedienung eines jeden mit der erfindungsgemäßen Vorrichtung angeordneten Fassadenelementes ermöglicht. In vorteilhafter Weise kann das Stellglied auch motorisch betätigbar sein, worunter jede Art der automatischen Betätigung verstanden werden soll, beispielsweise elektromotorisch, hyraulisch, pneumatisch usw. In besonders vorteilhafter Weise kann dann eine automatische Bewegungssteuerung verwendet werden, die dezentral und/oder zentral zur Bewegungssteuerung der einzelnen Fassadenelemente eingesetzt werden kann.

Mit Vorteil wird weiterhin angegeben, daß das Fassadenelement ein im wesentlichen rechteckiges, plattenförmiges Modul ist. In besonders vorteilhafter Weise ist dieses Modul in einem Rahmen montiert. Damit wird die Verwendung der erfindungsgemäßen Vorrichtung erheblich vereinfacht, da zunächst der Rahmen mit Halteelementen und Stellglied am Fassadenunterbau befestigt werden können. Abschließend kann dann das plattenförmige Modul in den Rahmen eingesetzt werden. Dadurch wird die erfindungsgemäße Vorrichtung auch hinsichtlich der Verwendung unterschiedlicher Fassadenelementmodule variabel.

Mit Vorteil wird angegeben, daß das Modul undurchsichtig ist, wodurch das Fassadenelement als Sichtschutz verwendbar wird. In vorteilhafter Weise kann das Modul lichtreflektierend und/oder lichtfilternd sein. Schließlich kann das Modul ein Lichtenergiegewinnungsmodul sein, beispielsweise ein Photovoltaikelement, ein Solarkollektor oder dgl.

Mit besonderem Vorteil wird weiterhin angegeben, daß die erfindungsgemäße Vorrichtung eine zwischen Fassadenelement und Fassadenunterbau angeordnete wetterresistente Fassadenabdeckung aufweist. Eine derartige Fassadenabdeckung, beispielsweise ein Metallblech, eine wasserdichte Folie oder dgl. kann den Fassadenunterbau, welcher in an sich bekannter Weise eine Wärmedämmschicht trägt, gegen Wettereinflüsse schützen.

Weitere Vorteile und Merkmale der Erfindung ergeben sich aus der folgenden Beschreibung anhand der Figuren. Dabei zeigen:
- Fig. 1: eine schematische Schnittansicht durch eine Fassade;
- Fig. 2: eine weitere schematische Schnittansicht entlang der Linie II-II gemäß Fig. 1;
- Fig. 3: eine Vergrößerung eines Teils der schematischen Schnittansicht gemäß Fig. 1, welche Details der erfindungsgemäßen Vorrichtung zur Fassadenverkleidung zeigt; und
- Fig. 4: eine schematische Frontalansicht einer Fassade, welche Variationen der Verstellung von Fassadenelementen erläutert.

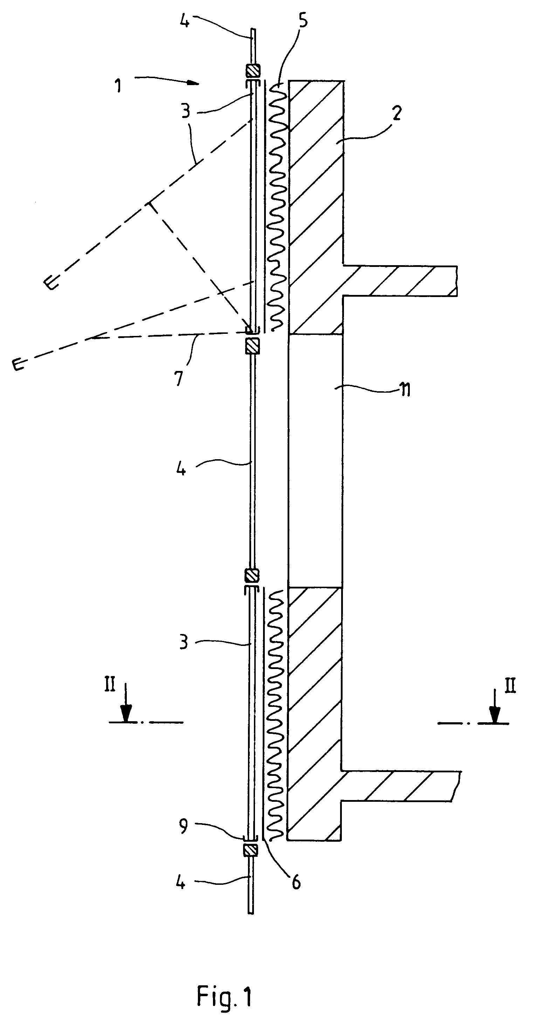

Der in Fig. 1 gezeigte Teil einer geschnittenen Fassade 1 zeigt den Fassadenunterbau 2, welcher in der Regel aus Beton oder gemauerten Wänden besteht. In diesen Wänden sind Fensteröffnungen 11 belassen, welche mit Fenstern 4 verschlossen werden. Die um die Fenster verbleibenden freien Felder des Fassadenunterbaus 2 werden mittels Fassadenelementen 3 angedeckt. Diese Fassadenelemente 3 werden in einem Abstand vom Fassadenunterbau 2 angeordnet, da die Fassade in der Regel hinterlüftet ist und darüber hinaus der Fassadenunterbau durch eine Wärmedämmung 5 abgedeckt ist. Üblicherweise werden die freien Fassadenunterbauflächen in rechteckige Felder unterteilt, welche von rechteckigen, plattenförmigen Fassadenelementen 3 abgedeckt werden. Hinter den Fassadenelementen 3 ist noch eine wetterresistente Fassadenabdeckung 6 angeordnet. Die Fassadenelemente 3 sind mittels Haltelementen zum Fassadenunterbau 2 relativbeweglich am Fassadenunterbau 2 befestigt. Die Bewegung wird durch ein Stellglied 7 kontrolliert, durch welches ein Fassadenelement 3 in die gewünschte Position verfahrbar und dort gehalten ist. Die Fassadenelemente 3 sind in einem Rahmen 9 angeordnet.

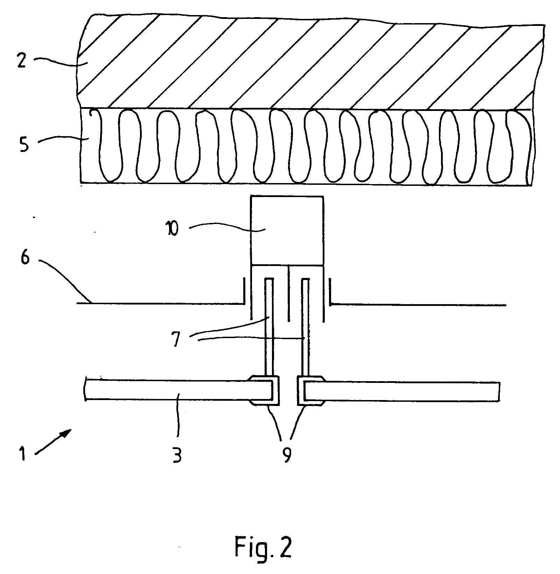

Fig. 2 zeigt einen Vertikalschnitt durch eine Fassade, welche neben den eben beschriebenen Elementen eine Führung 10 zeigt. Diese Führung 10 hat die Form einer Führungsschiene, in welcher die Halteelemente in Längsrichtung verfahrbar sind. Das von dem Stellglied 7 bewegte Fassadenelement 3 kann somit entlang der schienenartigen Führung 10 verfahren werden. Wenn die Halteelemente zudem Drehgelenke sind, kann das Fassadenelement gleichzeitig aus der durch die Fassadenoberfläche gebildeten Ebene mit Teilen herausbewegt werden, wenn das Stellglied 7 entsprechend ausgebildet ist.

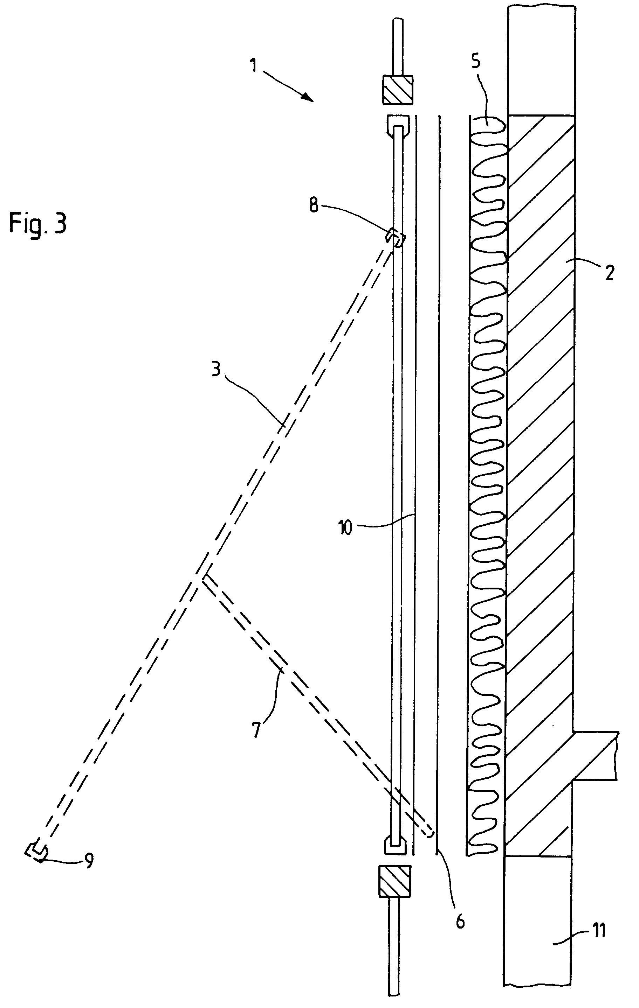

Diese Beweglichkeit ist insbesondere in Fig. 3 gut zu erkennen, wo das Fassadenelement 3 mittels der Halteelemente 8 zum einen drehbeweglich, zum anderen entlang der Führung 10 verschiebbar an dem Fassadenunterbau 2 angeordnet ist. Über das Stellglied 7, welches im gezeigten Ausführungsbeispiel ein scherenartiges Ausstellelement ist, kann somit das Fassadenelement aus der durch die Fassadenoberfläche gebildeten Ebene herausgekippt und gleichzeitig längs dieser Ebene verfahren werden. So kann das Fassadenelement in einen optimalen Winkel zur Sonne gestellt werden, beispielsweise bei Ausnutzung der Sonnenenergie, oder es kann als Sonnenschutz, als Lichtreflektionselement oder als Lichtfilter sowie als Sichtschutz vor ein Fenster verfahren werden.

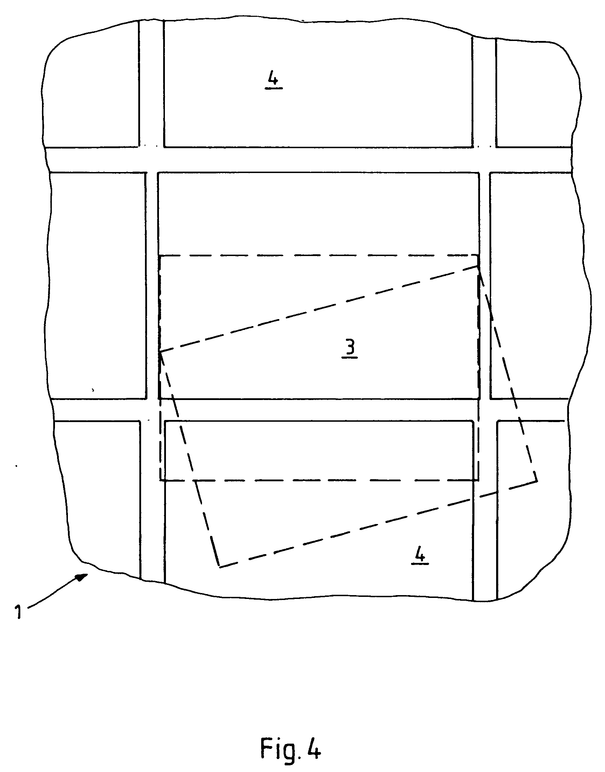

Je nach dem welche Funktion das eingesetzte Fassadenelement übernimmt, kann es durch Verwendung entsprechender Halteelemente und entsprechender Stellglieder in nahezu beliebige Positionen verfahren werden. Fig. 4 zeigt beispielsweise, daß nicht nur eine symmetrische Drehung und Verschiebbarkeit eines Fassadenelementes 3 durch die erfindungsgemäße Vorrichtung möglich ist, sondern bei Verwendung entsprechender Halteelemente und Stellglieder auch eine asymmetrische Verstellung. Dies ist beispielsweise wünschenswert, wenn mittels nicht direkt in Südlage angeordneter Fassadenelemente Sonnenenergie genutzt werden soll.

Es versteht sich von selbst, daß die Erfindung hinsichtlich der Ausgestaltung der Halteelemente und der verwendeten Stellglieder in keiner Weise beschränkt ist. Je nach gewählter Funktion werden die Fassadenelemente aus Metellblech, aus Keramik, aus Glas, verspiegelt oder getönt oder aus Kunststoff hergestellt. Auch Gewebe sind denkbar, wenn eine entsprechend wirksame Fassadenabdeckung 6 gewählt wird. Im Falle der Sonnenenergieausnutzung werden die Fassadenelemente als Photovoltaikelemente, Solarkollektoren oder dgl. ausgebildet.

### Bezugszeichenliste

- 1: Fassade
- 2: Fassadenunterbau
- 3: Fassadenelement
- 4: Fenster
- 5: Wärmedämmung
- 6: Fassadenabdeckung
- 7: Stellglied
- 8: Halteelement
- 9: Rahmen
- 10: Führung
- 11: Fensteröffnung

## Patentansprüche

1. Vorrichtung zur Verkleidung einer Fassade (1) mit einem flächigen Fassadenelement (3), welches, an einem Fassadenunterbau (2) angeordnet, eine Fassadenaußenseite bildet,
**gekennzeichnet durch**
Halteelemente (8), mit welchen das Fassadenelement (3) am Fassadenunterbau (2) zu diesem relativbeweglich befestigbar ist, und wenigstens ein Stellglied (7), mit welchem das Fassadenelement (3) in seiner Lage relativ zum Fassadenunterbau (2) verstellbar ist.

2. Vorrichtung nach Anspruch 1, dadurch gekennzeichnet, daß die Halteelemente (8) Drehgelenke sind.

3. Vorrichtung nach einem der Ansprüche 1 oder 2, dadurch gekennzeichnet, daß die Halteelemente (8) Gleitlager sind.

4. Vorrichtung nach einem der vorhergehenden Ansprüche, dadurch gekennzeichnet, daß das Stellglied (7) ein teleskopartig ausfahrbares Ausstellelement ist.

5. Vorrichtung nach einem der vorhergehenden Ansprüche, dadurch gekennzeichnet, daß das Stellglied (7) ein scherenartig bewegbares Ausstellelement ist.

6. Vorrichtung nach einem der Ansprüche 4 oder 5, dadurch gekennzeichnet, daß das Stellglied manuell betätigbar ist.

7. Vorrichtung nach einem der Ansprüche 4 bis 6, dadurch gekennzeichnet, daß das Stellglied motorisch betätigbar ist.

8. Vorrichtung nach Anspruch 7, dadurch gekennzeichnet, daß sie eine Steuereinheit zur Steuerung der Stellgliedbewegung aufweist.

9. Vorrichtung nach einem der vorhergehenden Ansprüche, dadurch gekennzeichnet, daß das Fassadenelement (3) ein im wesentlichen rechteckiges, plattenförmiges Modul ist.

10. Vorrichtung nach Anspruch 9, dadurch gekennzeichnet, daß das Fassadenelement (3) in einen Rahmen (9) eingesetzt ist.

11. Vorrichtung nach einem der Ansprüche 9 oder 10, dadurch gekennzeichnet, daß das Fassadenelement (3) undurchsichtig ist.

12. Vorrichtung nach einem der Ansprüche 9 bis 11, dadurch gekennzeichnet, daß das Fassadenelement (3) lichtreflektierend ist.

13. Vorrichtung nach einem der Ansprüche 9 bis 12, dadurch gekennzeichnet, daß das Fassadenelement ein Lichtfilter ist.

14. Vorrichtung nach einem der Ansprüche 9 bis 13, dadurch gekennzeichnet, daß das Fassadenelement ein Sonnenenergiegewinnungselement ist.

15. Vorrichtung nach einem der vorhergehenden Ansprüche, dadurch gekennzeichnet, daß hinter dem Fassadenelement eine wetterresistente Fassadenabdeckung (6) angeordnet ist.
